# EUROPEAN PATENT APPLICATION

(11) **EP 4 366 058 A1**
(43) Date of publication of application: **08.05.2024**
(21) Application number: 23831967.7
(22) Date of filing: 30.06.2023
(51) Int. Cl.: H01M 50/24, H01M 50/204, H01M 50/271, H01M 50/273, H01M 50/358, H01M 50/325, H01M 50/249, A62C 37/12, A62C 3/16

(54) **BATTERY MODULE INCLUDING CARTRIDGE FOR EXTINGUISHING FIRE**

(30) Priority: 01.07.2022 KR 20220081162
(71) Applicant: LG Energy Solution, Ltd., Seoul 07335 (KR)
(72) Inventor: LEE, Sun-Jung, Daejeon 34122 (KR); SHIN, Ju-Hwan, Daejeon 34122 (KR); OH, Sang-Seung, Daejeon 34122 (KR); LEE, Jae-Hyun, Daejeon 34122 (KR); LEE, Hyoung-Suk, Daejeon 34122 (KR)
(74) Representative: Plasseraud IP
(86) International application number: PCT/KR2023/009273
(87) International publication number: WO 2024/005609

(57) **Abstract**

Disclosed is a battery module with improved safety through an improved frame structure and a fire extinguishing cartridge. The battery module includes a module housing including a top frame and configured to form an inner space; at least one cell assembly accommodated in the inner space of the module housing and including at least one battery cell; and a fire extinguishing cartridge provided to the top frame and configured to emit a fire extinguishing agent when a trigger condition for starting operation is achieved.

## Description

### TECHNICAL FIELD

The present application claims priority to Korean Patent Application No. 10-2022-0081162 filed on July 1, 2022 in the Republic of Korea, the disclosures of which are incorporated herein by reference.

The present disclosure relates to a battery module, and more specifically, to a battery module with improved safety through an improved frame structure and a fire extinguishing cartridge provided thereto.

### BACKGROUND ART

As the demand for portable electronic products such as notebook, video cameras and cellular phones using electricity as a driving source is rapidly increasing and moving robots, electric bicycles, electric carts, electric vehicles, and the like are commercialized in earnest, high-performance secondary batteries capable of repeated charging and discharging are being actively researched.

Commercialized secondary batteries include nickel cadmium battery, nickel hydrogen battery, nickel zinc battery, lithium secondary battery, and so on. Among these, lithium secondary batteries have the advantage of free charging and discharging due to little memory effect, and a very low self-discharge rate, compared to the nickel-based secondary battery, and the lithium secondary batteries have high energy density and high operating voltage. Thus, the lithium secondary batteries are not only studied more intensively, but also applied more extensively to actual product, compared to other types of secondary batteries.

Recently, secondary batteries are widely used not only in small devices such as portable electronic devices but also in medium and large devices such as electric vehicles and energy storage systems (ESS).

In this case, a battery module in which a plurality of electrically connected secondary batteries are accommodated together inside the module case is mainly applied. Moreover, when high power or large capacity is required, a battery pack in which a plurality of battery modules are electrically connected is sometimes applied.

Secondary batteries with the above advantages are increasingly being used in various forms, but due to their operating characteristics, secondary batteries may be subject to swelling, rush current, and overheating due to Joule heating, thermal runaway due to a decomposition reaction of the electrolyte, or the like, so securing safety may be an important issue.

The battery module or the battery pack may be more vulnerable to thermal events because a plurality of secondary batteries (battery cells) or a plurality of battery modules are space-intensively crowded. In particular, when thermal runaway occurs inside the battery module, high temperature gas, flame, heat, and the like are generated, and if they are not quickly controlled, due to thermal propagation or the like, they may cause a chain fire or explosion in the corresponding battery module as well as adjacent battery modules.

In the case of medium to large battery packs applied to vehicles such as electric vehicles that users ride, a large number of battery cells and battery modules are installed more intensively to increase output and capacity, which may cause large-scale fires as well as human damage. Thus, there may be a great need to more robustly suppress dangerous situations such as fire, which may occur in the battery module or the like, in the initial stage.

### DISCLOSURE

### Technical Problem

The present disclosure is designed to solve the problems of the related art, and therefore the present disclosure is directed to providing a battery module or the like with further improved safety by means of not only a structural improvement to improve the durability of the battery module, but also a configuration for a fire extinguishing cartridge that is organically combined with the improved structure.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a battery module, comprising: a module housing including a top frame and configured to form an inner space; at least one cell assembly accommodated in the inner space of the module housing and including at least one battery cell; and a fire extinguishing cartridge provided to the top frame and configured to emit a fire extinguishing agent when a trigger condition for starting operation is achieved.

Here, the trigger condition may be at least one of the case where an internal temperature is equal to or greater than a criterion temperature and the case where an internal pressure is equal to or greater than a criterion pressure.

Specifically, the top frame of the present disclosure may include an upper plate; a lower plate spaced apart from the upper plate and configured to face the cell assembly in a lower direction; and a vertical portion configured to physically support the upper and lower plates therebetween so that a plurality of mounting spaces are provided between the upper and lower plates, and in this case, the fire extinguishing cartridge may be provided in at least one of the plurality of mounting spaces.

In addition, the vertical portion of the present disclosure may be arranged in a longitudinal direction corresponding to the cell assembly.

Depending on the embodiment, the lower plate may be made of a material with a lower elastic modulus or a higher heat transfer coefficient or thermal expansion coefficient compared to the upper plate.

Moreover, the mounting space may be connected to a venting hole, through which a venting gas generated from the cell assembly flows to the outside, to form a flow path.

In addition, the lower plate of the present disclosure may have an opening formed in an area corresponding to the mounting space.

In this case, the battery module according to the present disclosure may further comprise a stopper provided in the opening and configured to open the opening when the temperature or pressure of the inner space increases to a predetermined level or above.

More preferably, the stopper of the present disclosure may have a needle-like protrusion formed at a top thereof to perforate the fire extinguishing cartridge when the stopper moves upward due to pressure, or may have a wedge shape with a tapered top and be made of elastic material.

In another aspect of the present disclosure, there is also provided a battery pack, comprising the battery module according to the present disclosure, and in still another aspect of the present disclosure, there is also provided a vehicle, comprising the battery module according to the present disclosure.

### Advantageous Effects

According to the present disclosure, the durability of the battery module may be improved through a simple structural improvement, and also a fire extinguishing cartridge may be simply installed in the improved structure to improve durability, thereby further improving assembly facilitation and convenience in use.

According to an embodiment of the present disclosure, since threshold changes in internal environmental factors (temperature, pressure, or the like) may be naturally combined with the operation of the fire extinguishing cartridge, it is possible to more rapidly respond to the occurrence of risk factors in the initial stage.

According to another embodiment of the present disclosure, the fire extinguishing agent of the fire extinguishing cartridge may be induced to be intensively ejected to the area where the cell assemblies faces each other (plane vs. plane), thereby increasing the efficiency of fire suppression or the like. Also, it is possible to more effectively suppress the fire or the like from spreading in chain to other adjacent battery modules or cell assemblies.

The effects of the present disclosure are not limited to the above effects, and effects not mentioned herein can be clearly understood by those skilled in the art from the following specification and the accompanying drawings.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing the overall appearance of a battery module according to an embodiment of the present disclosure.
FIG. 2 is an exploded perspective view showing the internal structure of the battery module shown in FIG. 1.
FIG. 3 is a perspective view showing the overall appearance of a battery module according to another embodiment of the present disclosure.
FIG. 4 is an exploded perspective view showing the internal structure of the battery module shown in FIG. 3.
FIG. 5 is a diagram showing a top frame including a fire extinguishing cartridge according to an embodiment of the present disclosure.
FIG. 6 is a diagram showing a top frame including a fire extinguishing cartridge according to another embodiment of the present disclosure.
FIG. 7 is a diagram showing an embodiment of a lower plate having an opening.
FIG. 8 is a cross-sectional view showing a stopper provided in the opening shown in FIG. 7.
FIGS. 9 and 10 are cross-sectional views showing a stopper according to other embodiments of the present disclosure.
FIG. 11 is an exploded perspective view schematically showing the configuration of a top frame according to still another embodiment of the present disclosure.
FIG. 12 is an enlarged cross-sectional view showing a partial configuration of a battery module according to still another embodiment of the present disclosure.
FIG. 13 is a diagram schematically showing a fire extinguishing agent emission configuration for the embodiment of FIG. 12.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, this specification may include various embodiments, and for each embodiment, different features will be described in detail, and features identical or similar to those of other embodiments will not be described in detail.

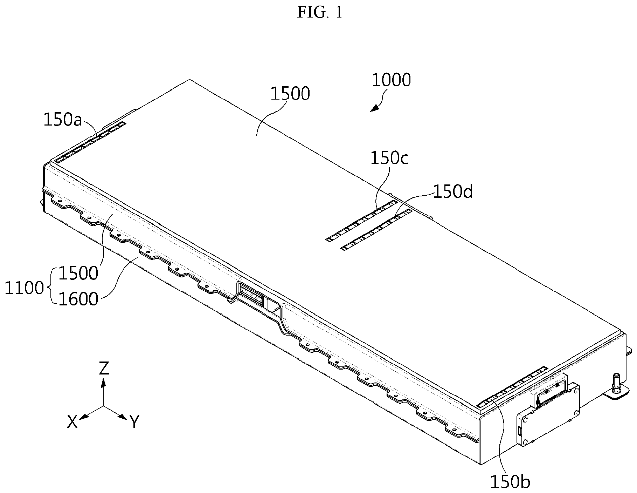

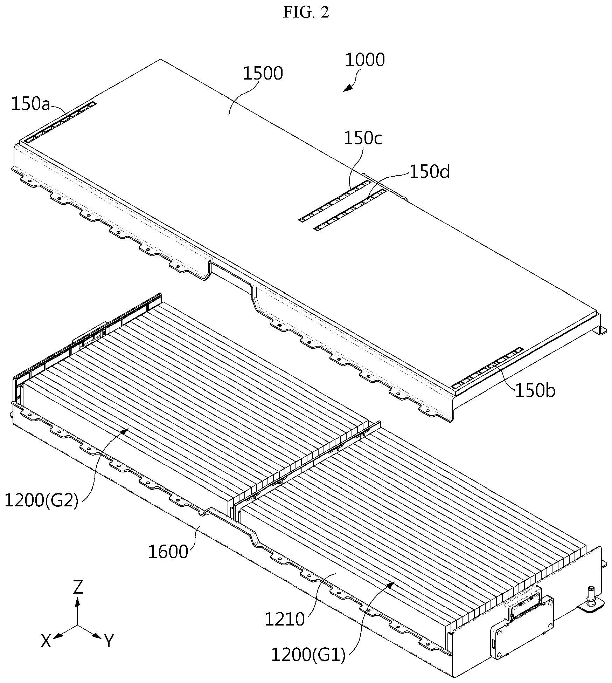

FIG. 1 is a perspective view showing the overall appearance of a battery module 1000 according to an embodiment of the present disclosure, and FIG. 2 is an exploded perspective view showing the internal structure of the battery module 1000 shown in FIG. 1.

As shown in FIGS. 1 and 2, the battery module 1000 includes a module housing 1100 that functions as a case, and a cell assembly 1200 provided inside the module housing 1100 and including at least one battery cell 1210.

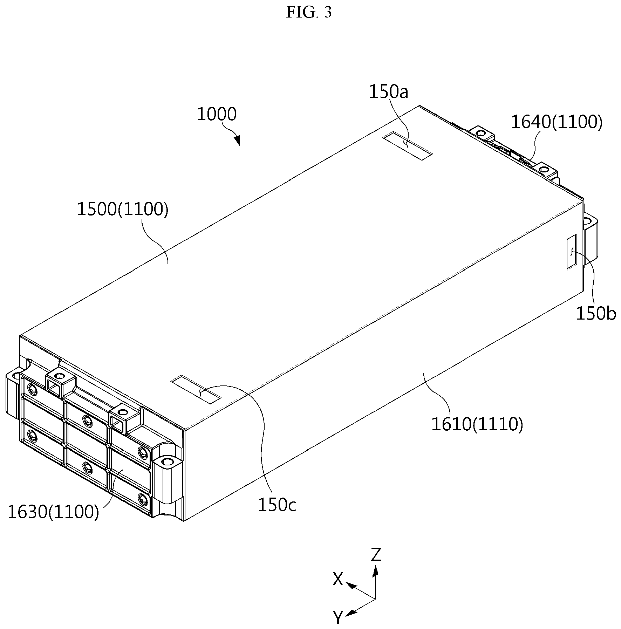

As illustrated in the drawings, the module housing 1100 may include a top frame 1500 located at the top (based on the Z axis) and a base frame 1600 coupled to the top frame 1500. As in another embodiment of the present disclosure described later with reference to FIG. 3 or the like, the module housing 1100 of the present disclosure may be implemented with various structures and forms, including the embodiment illustrated in the drawings, depending on the shape, structure, size, number of members to be connected, or the like.

The battery cell 1210 refers to a secondary battery that includes an electrode assembly, an electrolyte, and a battery case. The drawings show a pouch-type secondary battery having high energy density and allowing easy stacking as an example, but a cylindrical or rectangular secondary battery may also be applied to the battery cell 1210.

As shown in FIG. 2 or the like, the cell assembly 1200 may be configured such that battery cells 1210, which are installed upright so that minor axis becomes a vertical direction (Z-axis based on the drawings), are arranged (stacked) side by side in the left and right directions (X-axis based on the drawings).

The drawings show an example in which the cell assemblies 1200 (G1, G2), which are arranged in a 1×2 matrix based on the vertical (X-axis) and horizontal (Y-axis) direction, are accommodated in the module housing 1100, but depending on the spatial characteristics and electrical capacity, power size, or the like, the cell assemblies 1200 having various combinatorial arrangements such as 1×1 matrix, 2×4 matrix, 3×2 matrix, or the like may be provided in the module housing 1100.

Also, although not shown in the drawings, the cell assemblies 1200 may be electrically connected by a bus bar made of an electrically conductive metal material.

The module housing 1100 is configured to accommodate at least one cell assembly 1200, and may be made of a highly rigid and durable metal material or a plastic material such as ABS resin to physically or chemically protect the battery cells 1210 provided therein.

In addition, as shown in the drawings, the module housing 1100 may have at least one venting hole 150a, 150b, 150c, 150d that functions as a type of outlet for discharging a venting gas generated from the battery cell 1210 to the outside.

Depending on the embodiment, the venting hole 150a, 150b, 150c, 150d may have a membrane that ruptures at a certain pressure or above. In this case, as the membrane structure ruptures due to the venting gas generated inside, the venting hole 150 that is normally blocked is opened, so that the venting gas generated inside may be discharged to the outside.

The number and location of venting holes 150 may be configured differently from the example shown in the drawings depending on the embodiment, and in order to minimize damage, it is preferable that the venting holes are provided at locations where the discharge of the venting gas is guided to a specific direction.

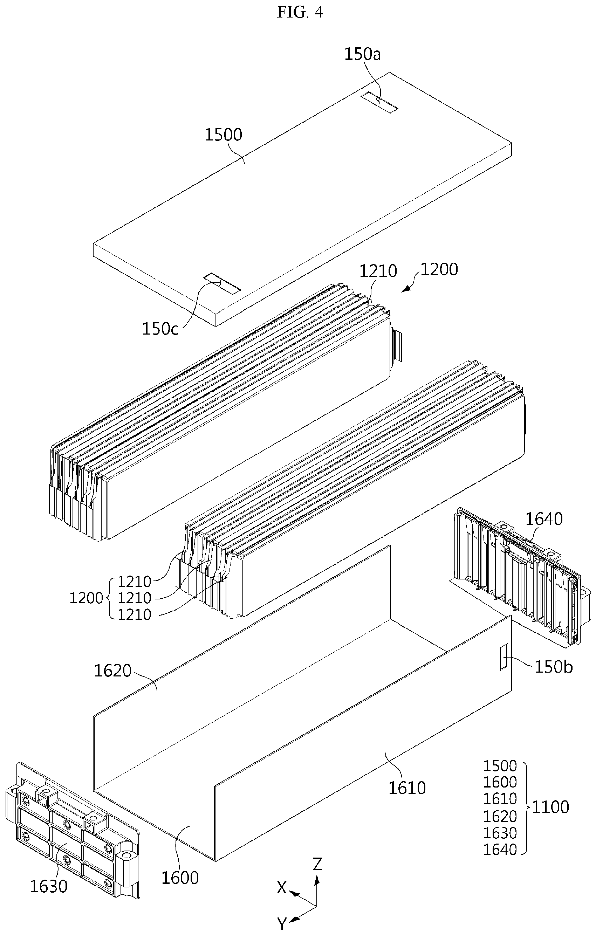

FIG. 3 is a perspective view showing the overall appearance of a battery module 1000 according to another embodiment of the present disclosure, and FIG. 4 is an exploded perspective view showing the internal structure of the battery module 1000 shown in FIG. 3.

The embodiment shown in FIGS. 3 and 4 is different from the above embodiment in terms of form or external structure, but the essential functions or the like substantially correspond thereto. Thus, the same reference signs are used for corresponding components, but it is obvious that the same reference signs does not mean that both embodiments are physical identical.

As shown in FIGS. 3 and 4, the module housing 1100 forming the inner space may include a top frame 1500, a base frame 1600, and side frames 1610 to 1640.

The top frame 1500 is located at the top of the module housing 1100, and the base frame 1600 may be disposed to be spaced by a predetermined distance from the top frame 1500 at the bottom of the top frame 1500. The side frames 1610 to 1640 may be disposed between the top frame 1500 and the base frame 1600 so that their upper ends and lower ends are connected thereto, respectively.

The top frame 1500, the base frame 1600, and/or the side frames 1610 to 1640 may be configured in a plate shape, but may be configured in the form of a polyhedron (for example, a rectangular parallelepiped) with a certain thickness or more.

In order to implement the main technical ideas of the present disclosure, in the frame structure that makes up the module housing 1100 of the present disclosure, especially the top frame 1500 is configured to have an appropriate thickness or height (based on the Z axis) to provide a space for installation of at least one fire extinguishing cartridge 1300 therein. This will be described later specifically and in detail.

At least some of the top frame 1500, the base frame 1600, and the side frames 1610 to 1640 may be configured in an integrated form. For example, as shown in FIG. 4, among the four side frames 1610 to 1640, the right frame 1610 and the left frame 1620 may be integrated with the base frame 1600. In this case, the right frame 1610, the left frame 1620, and the base frame 1600 that are integrated with each other may be referred to by terms such as U-frame according to their shape characteristics.

In this case, the front frame 1630 and the rear frame 1640 are end frames and may be coupled to the open portions at the front and rear ends of the U-frame, respectively, and the top frame 1500 may be coupled to the top opening of the U-frame. Adjacent frames may be coupled by fastening flanges and bolts or by laser welding or ultrasonic welding.

In the battery module 1000 shown in FIG. 4, two cell assemblies 1200 are provided inside the module housing 1100, and each of the cell assemblies 1200 includes at least one battery cell 1210.

In the embodiment described above with reference to FIG. 2, the cell assembly 1200 configured in a 1×2 matrix based on the vertical (X axis) and horizontal (Y axis) direction is provided in the module housing 1100, and in the case of the battery module 1000 in the embodiment described above with reference to FIG. 4, a cell assembly 1200 configured in a 2×1 matrix based on the vertical (X axis) and horizontal (Y axis) direction is provided in the module housing 1100.

In the battery module 1000 shown in FIG. 4, at least one venting hole 150a, 150b, 150c through which a venting gas is discharged may also be formed in the top frame 1500 or/and the side frame 1610, as described above. In particular, the venting hole may also be formed only in the top frame 1500. That is, in the embodiment of FIG. 4, the venting hole 150b formed in the side frame 1610 may be removed. In this embodiment, by allowing the venting gas to be discharged only toward the top frame, the response capability of the fire extinguishing cartridge 1300 by the venting gas may be secured more stably.

The top frame 1500, the base frame 1600 or the side frame 1610 to 1640, and at least one of the upper plate 1510 and the lower plate 1520, which are explained later as components of the top frame 1500, may have an inner surface made of clad metal, or flame retardant material such as GFRP may be attached thereto.

The axis shown in the drawings, terms referring to that axis, and terms referring to directions such as "upper", "lower", "front", "rear", "vertical" and "top" described with respect to the axis are just to present relative standards for describing embodiments of the present disclosure, and it is obvious that these terms are not intended to specify any direction or location on an absolute basis, and may vary relatively depending on the location of a target object, the location of an observer, a viewing direction, or the like. For example, in the present disclosure, the top frame may be referred to as a side frame or a base frame depending on the mounting type, rotation state, or the like of the battery module or the battery pack.

Hereinafter, an embodiment of the present disclosure will be described by defining the Z-axis as a standard for the upper and lower direction or the vertical direction as described above, and from a corresponding perspective, an embodiment of the present disclosure will be described by defining the Y-axis as a standard for the front or rear and the X-axis as a standard for the left or right direction.

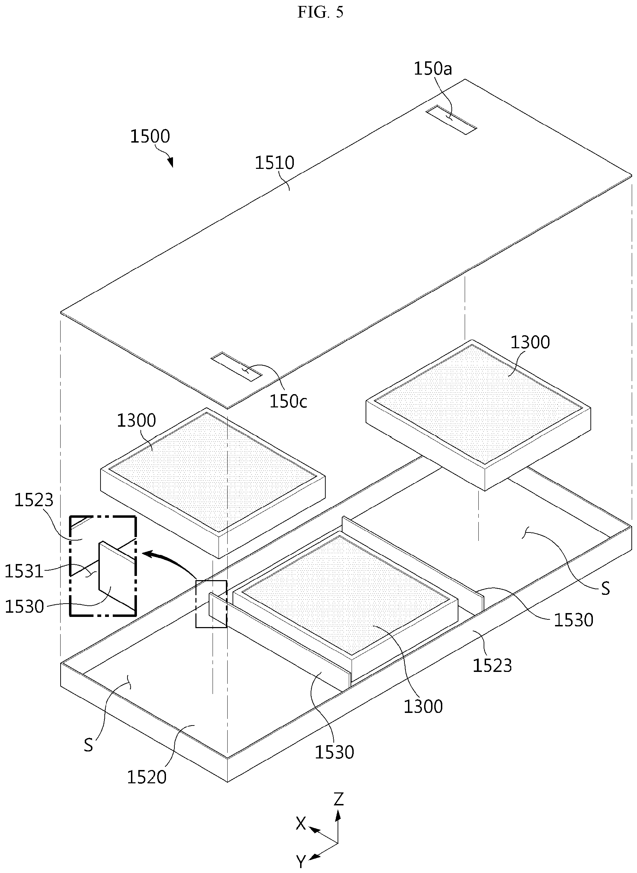

FIG. 5 is a diagram showing a top frame 1500 including a fire extinguishing cartridge 1300 according to an embodiment of the present disclosure.

As shown in FIG. 5, the fire extinguishing cartridge 1300 of the present disclosure is provided in the inner space provided by the top frame 1500. The fire extinguishing cartridge 1300 is configured to emit a fire extinguishing agent when a trigger condition for starting operation is achieved, as explained later.

The top frame 1500 of the present disclosure may specifically include an upper plate 1510, a lower plate 1520, and a vertical portion 1530 as shown in the drawings.

The upper plate 1510 is a plate located at the top of the top frame 1500 and may be formed in a plate shape or a polyhedron shape with volume, as shown in the drawings.

In addition, in order to effectively protect the internal components physically, the upper plate 1510 may be made of metal materials such as high-strength SUS (stainless steel) or plastic materials such as ABS resin (acrylonitrile-butadiene-styrene copolymer) with high heat resistance, temperature resistance, and impact resistance, or other type of plastic materials, and depending on the embodiment, the upper plate 1510 may be made of different materials for each part.

The lower plate 1520 is a plate installed vertically spaced apart from the upper plate 1510, and faces the cell assembly 1200 installed in the inner space provided by the module housing 1100 downward (based on the Z axis).

The lower plate 1520 may also be made of a material corresponding to the upper plate 1510, but is desirably made of a material with a low elastic modulus or a high heat transfer coefficient or thermal expansion coefficient in order to react quickly to factors such as temperature and pressure in the inner space where the cell assembly 1200 is provided and to effectively transmit the same to the fire extinguishing cartridge 1300 provided at the top.

If the lower plate 1520 is made of a material with a relatively low elastic modulus or a high thermal expansion coefficient, if the internal pressure or the internal temperature of the module housing 1100, especially the base frame 1600, where the cell assembly 1200 is accommodated, increases, the physical displacement (upward direction) of the lower plate 1520 may easily and significantly be caused accordingly. Therefore, physical displacement due to changes in internal pressure/temperature may be more effectively transmitted to the fire extinguishing cartridge 1300. Meanwhile, since the upper plate 1510 is not easily deformed by heat or pressure, the overall shape of the battery module may be maintained stably.

Depending on the embodiment, when pressure or external force exceeding the criterion value is applied to the fire extinguishing cartridge 1300, the finishing material or exterior material may be damaged (ruptured) or the sealing means (cap, stopper, or the like) may be separated, thereby causing the internal fire extinguishing agent, fire extinguishing material, or the like to be emitted.

In relation to this operating method, if the lower plate 1520 is induced to make physical displacement large and easily as described above, the operating mechanism of the fire extinguishing cartridge 1300 may be more reliably implemented, which may effectively solve the problems of a conventional battery module with a fire extinguishing function in which the emission of a fire extinguishing agent is delayed or not operated at all.

From the point of view corresponding to the form of effectively transmitting physical displacement (change) as described above, the lower plate 1520 is preferably made of a material with a high heat transfer coefficient so that, when the internal temperature is increased by the cell assembly 1200, the resulting thermal change may be more quickly and reliably transmitted to the fire extinguishing cartridge 1300.

Depending on the embodiment, the fire extinguishing cartridge 1300 may include a fire extinguishing agent that expands by heat at the criterion temperature or above, for example in the form of a capsule containing calcium carbonate a halogen compound, or the like in powder form, and may include a substance that emits a fire extinguishing gas (carbon dioxide or the like) at high temperature.

In addition, the fire extinguishing cartridge 1300 may be configured so that the finishing material or the exterior material is physically changed (broken, ruptured, melted, or the) at the criterion temperature or above or the sealing means (cap, stopper, or the like) made of paraffin or the like undergoes a phase transition to emit the fire extinguishing agent, fire extinguishing material, or the like therein.

Regarding this operation method, when the lower plate 1520 is made of a material with a high heat transfer coefficient as described above, the operating mechanism of the fire extinguishing cartridge 1300 may be implemented more reliably by quickly transmitting the internal temperature change (temperature rise) to the fire extinguishing cartridge 1300, thereby effectively solving conventional problems such as delayed emission or non-operation of the fire extinguishing agent. Also, since the upper plate 1510 has a relatively low heat transfer coefficient, it is possible to prevent the heat of the battery module from being transferred to other battery modules, devices, or passenger located at the top.

In this way, the fire extinguishing cartridge 1300 is configured to emit the fire extinguishing agent provided therein when a trigger condition, which is a condition for starting operation, is achieved, and the trigger condition may be at least one of the case where the internal temperature is equal to or greater than a criterion temperature and the case where the internal pressure is equal to or greater than a criterion pressure as in the above embodiment.

The fire extinguishing agent (fire extinguishing material) provided inside the fire extinguishing cartridge 1300 may employ be a variety of substances known at the time of filing of this application, including ammonium phosphate, sodium bicarbonate, potassium bicarbonate, ammonium phosphate, or the like, and It may be in a powder state, a solid state, a liquid state, or a gaseous state. Also, the exterior material or the case of the fire extinguishing cartridge 1300 may be made of a material that melts at the criterion temperature or above or may be made of a material that tears or ruptures/breaks when an external force is applied.

The fire extinguishing cartridge 1300 may be configured to be filled with a separate inert high-pressure gas in addition to the fire extinguishing agent. When configured in this way, the fire extinguishing agent inside the fire extinguishing cartridge 1300 may be ejected with stronger pressure under a trigger condition, so it is possible to suppress fire and prevent ignition more effectively.

In order to effectively implement the technical idea of the present disclosure described above, the lower plate 1520 is preferably made of a material with a relatively lower elastic modulus or a relatively higher thermal expansion coefficient or heat transfer coefficient relatively compared to at least one of the base frame 1600 or the side frames 1610 to 1640 constituting the module housing 1100 and the upper plate 1510 constituting the top frame 1500.

Characteristic values such as elastic modulus, thermal expansion coefficient, heat transfer coefficient, or the like of the lower plate 1520 may be set by comprehensively considering not only the previously described information, but also the installation environment of the battery module 1000, product specifications, the number of cell assemblies or battery cells, safety criteria, or the like.

As illustrated in the drawings, a guiding wall 1523 may be formed integrally or coupled the entire or part of the outer circumference of the lower plate 1520. Depending on the embodiment, the guiding wall 1523 may be formed on the upper plate 1510 to vertically extend downward on the entire or part of the outer circumference of the upper plate 1510.

The vertical portion 1530, which is a component of the top frame 1500, is installed in a standing form and corresponds to the wall located between the upper plate 1510 and the lower plate 1520. As shown in the drawings, the vertical portion 1530 defines the space between the upper plate 1510 and the lower plate 1520 into a plurality of mounting spaces S where the fire extinguishing cartridge 1300 is accommodated.

In addition, the vertical portion 1530 is configured to physically support the upper plate 1510 and the lower plate 1520 to structurally improve the overall physical rigidity and durability of the top frame 1500, like a kind of H beam.

Through this configuration, the battery module 1000 of the present disclosure may physically protect the battery module 1000 itself even when an external force is applied from the outside, and may also effectively prevent the fire extinguishing cartridge 1300 accommodated in the mounting space S from unnecessarily operating due to unintended external factors.

The mounting space S of the present disclosure is preferably configured to form a flow path connected to the venting holes 150a, 150c through which the venting gas generated in the cell assembly 1200 flows to the outside.

The mounting space S of the present disclosure is formed by the vertical portion 1530, but rather than being a blocked structure, a separated space 1531 is preferably formed between the vertical portion 1530 and the guiding wall 1523, as illustrated in the enlarged view of FIG. 5, to form a flow path in relationship with the venting hole 150 formed in the upper plate 1510 or the like. Through this configuration of the present disclosure, the venting gas generated inside may also be effectively discharged through the top frame 1500.

In order to form a flow path between the mounting space S and the venting hole 150, various methods such as a method of separating the guiding wall 1523 and the vertical portion 1530 from each other as illustrated in the drawings, a method of forming at least one opening in the vertical portion 1530, and a method of dividing the vertical portion 1530 itself into two or more parts to form a space therebetween may be applied.

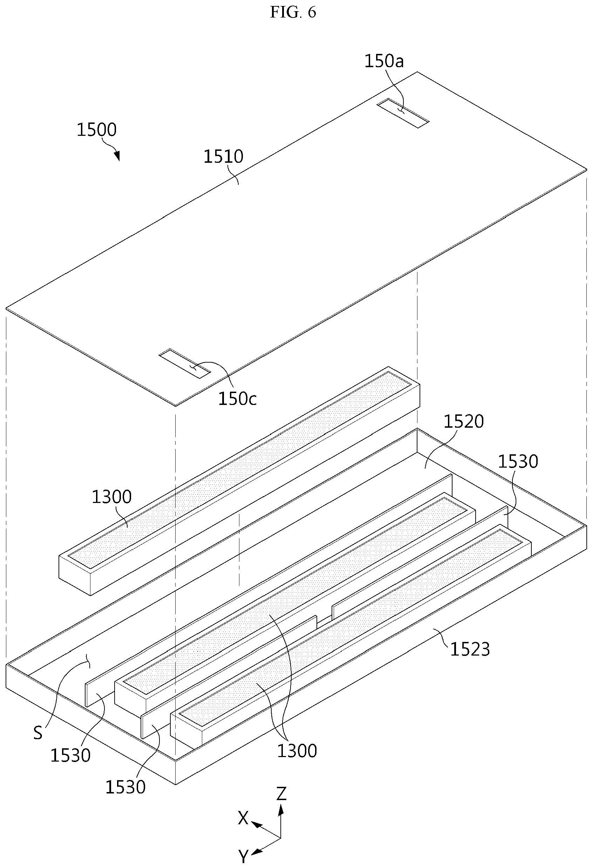

FIG. 6 is a diagram showing a top frame 1500 including a fire extinguishing cartridge 1300 according to another embodiment of the present disclosure.

The vertical portion 1530 of the present disclosure, which physically supports the lower plate 1520 and the upper plate 1510 therebetween and forms the mounting space S in which the fire extinguishing cartridge 1300 is provided, may be configured to extend in a longitudinal direction that corresponds to the long axis direction of the top frame 1500 as shown in FIG. 6.

FIG. 6 is an embodiment thereto, and shows two vertical portions 1530 that have a shape extending in the longitudinal direction (Y-axis) and are arranged at an appropriate interval (based on the X-axis). The lower vertical portion 1530 (based on FIG. 6) is divided into two parts as described above. The arrangement of the vertical portions 1530 corresponds to the direction in which the cell assemblies 1200 are arranged (see FIG. 4), and the extension or arrangement direction of the vertical portions 1530 is also preferably configured to correspond to the long axis longitudinal direction of the cell assembly 1200 or the battery cell 1210.

In this configuration, when the fire extinguishing agent is ejected or emitted from the fire extinguishing cartridge 1300 due to a trigger condition, the fire extinguishing agent may be emitted toward the cell assembly 1200 located downward (based on the Z axis) with respect to the lower plate 1520. In addition, the fire extinguishing agent may be induced to be ejected intensively to the area where the cell assemblies 1200 or the battery cells 1210 where the event has occurred face each other (plane vs. plane). Therefore, it is possible not only to increase the efficiency of fire suppression, but also to more effectively suppress the spread of fire or the like to other adjacent battery cells, battery modules, or cell assemblies 1200.

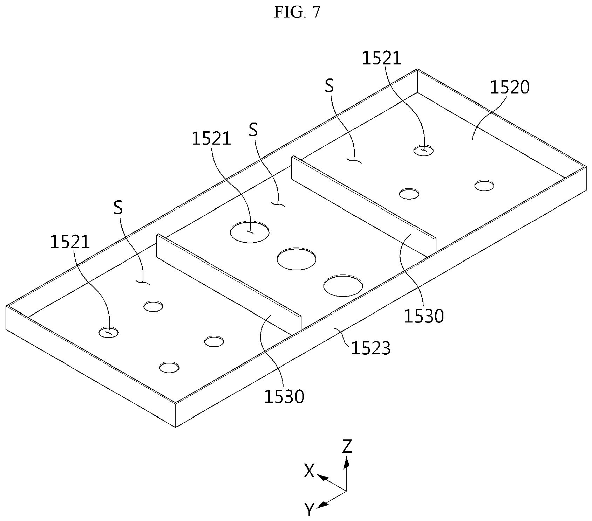

FIG. 7 is a diagram showing an embodiment of a lower plate 1520 having an opening 1521.

As shown in FIG. 7, at least one opening 1521 may be formed in the area or portion of the lower plate 1520 corresponding to the mounting space S where the fire extinguishing cartridge 1300 is provided.

If the fire extinguishing agent is made of a gas such as carbon dioxide, the opening 1521 may not be limited to a specific location, but as shown in the drawing, the opening 1521 is preferably formed in the lower plate 1520 corresponding to mounting space S so that the efficiency of temperature dropping and fire suppression is further increased by inducing the fire extinguishing agent to be sprayed directly below the fire extinguishing cartridge 1300.

As long as the fire extinguishing agent inside the fire extinguishing cartridge 1300 can be emitted toward the cell assembly 1200 located at the bottom of the lower plate 1520, the number, shape, and size of the openings 1521 may be applied in various ways, and depending on the embodiment, the area of the lower plate corresponding to the mounting space S in 1520 may be configured to be entirely or partially in a mesh form.

Based on the embodiment shown in FIG. 6, it is preferable that a plurality of openings 1521 are arranged in a longitudinal direction corresponding to the cell assemblies 1200 so that the fire extinguishing agent may be ejected intensively to the area where the cell assemblies 1200 or battery cells 1210 faces each other (plane vs. plane).

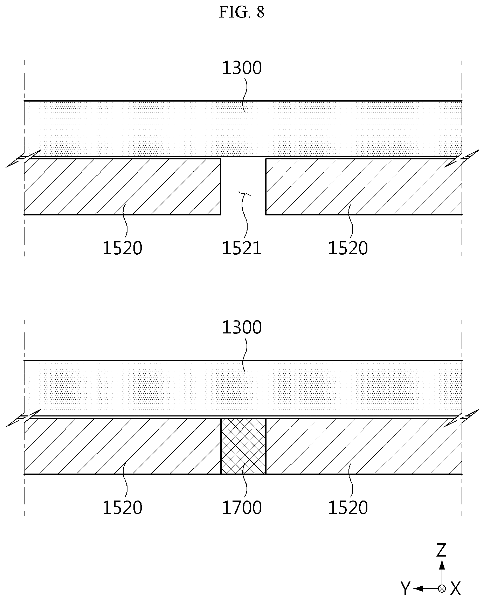

FIGS. 8 to 10 are diagrams showing embodiments of the present disclosure regarding the stopper 1700 provided in the opening 1521 shown in FIG. 7.

As shown in FIG. 8, at least one opening 1521 formed in the lower plate 1520 may be provided with a stopper 1700 that functions as a kind of stopper or cap to block the opening 1521 under normal circumstances.

The stopper 1700 is made of a material that melts at a certain temperature or above, such as paraffin, and may be configured to naturally open the opening 1521 when the internal temperature rises. In addition, when the internal pressure rises to a certain level or above, the stopper 1700 and the opening 1521 are not fixedly coupled, but the stopper 1700 may be provided to be physically fit into the opening 1521 so that the stopper 1700 may deviate from the opening 1521 (upward based on the X-axis).

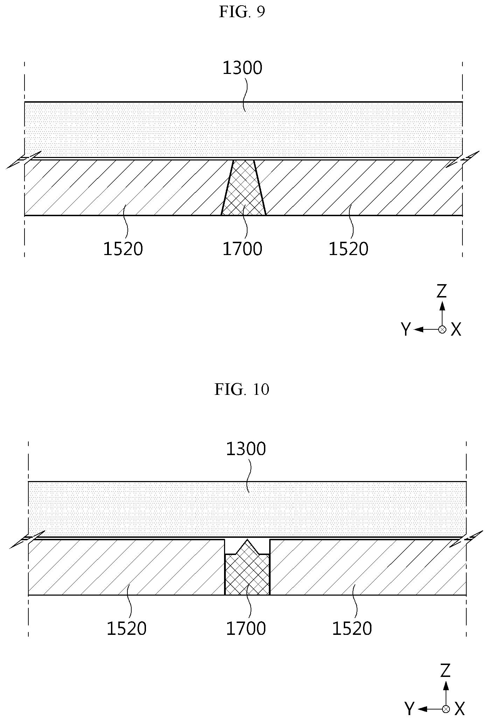

Also, as shown in FIG. 9, the stopper 1700 of the present disclosure has a kind of wedge shape with a tapered top and may be made of an elastic material.

When the stopper 1700 has a wedge shape or the like as above, the stopper 1700 may effectively maintain the function of blocking or sealing the opening 1521 up to an appropriate level of pressure, and the stopper 1700 may also condense the pressing force that presses upward. Thus, when the internal pressure reaches a critical value, the stopper 1700 may be rapidly deviated from the opening 1521 with a strong release force.

If the stopper 1700 is configured to rapidly deviate upward with a strong release force as above, the physical displacement may be used as a trigger to more reliably rupture or break the exterior material of the fire extinguishing cartridge 1300 provided in the mounting space S of the lower plate 1520. Through this, the operating mechanism for emitting the fire extinguishing agent may be more securely implemented.

From a corresponding perspective, the stopper 1700 of the present disclosure may has a needle-like protrusion or a similar physical structure at the top so that a perforation occurs in the fire extinguishing cartridge 1300 when the stopper 1700 moves upward by pressure, as illustrated in FIG. 10.

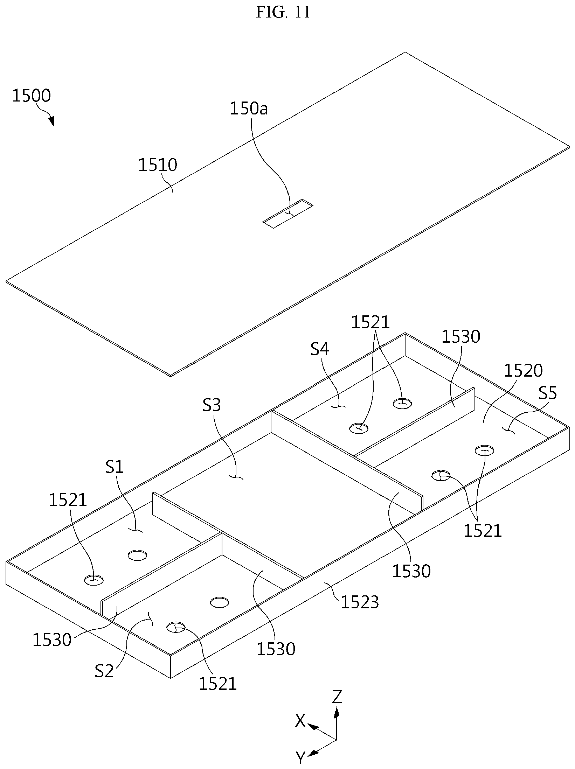

FIG. 11 is an exploded perspective view schematically showing the configuration of a top frame 1500 according to still another embodiment of the present disclosure.

Referring to FIG. 11, a plurality of mounting spaces S1 to S5 divided by a vertical portion 1530 may be formed in the top frame 1500 to accommodate the fire extinguishing cartridge 1300. At this time, the venting hole 150a may be formed in a mounting space different from the opening 1521. For example, as shown in the embodiment of FIG. 11, five mounting spaces S1 to S5 may be provided in the top frame 1500. At this time, the opening 1521 may be formed in four mounting spaces S1, S2, S4, and S5. Also, the venting hole 150a may be formed in the remaining mounting space, namely S3.

According to this embodiment of the present disclosure, the venting gas or the like introduced through the opening 1521 may flow along a long path inside the top frame 1500. Therefore, while the venting gas flows through the internal path of the top frame 1500, the contact area with the fire extinguishing cartridge 1300 may be increased to ensure stable operating performance of the fire extinguishing cartridge 1300 and increase the possibility of contact with the fire extinguishing agent. Also, in this case, before the venting gas flows out into the venting hole 150a, the temperature may be further lowered, and the leakage of particles such as sparks or flames contained in the venting gas may be further suppressed.

Also, as shown in FIG. 11, a plurality of vertical portions 1530 may be included between the upper plate 1510 and the lower plate 1520, and at least some of the vertical portions 1530 may be configured to extend in different directions. In particular, two or more vertical portions 1530 may have extension directions orthogonal to each other. For example, as shown in FIG. 11, some vertical portions 1530 may extend in the X-axis direction, and other vertical portions 1530 may extend in the Y-axis direction.

According to this embodiment, more mounting space for the fire extinguishing cartridge 1300 may be secured by the vertical portion 1530. Therefore, it may be advantageous for the fire extinguishing cartridge 1300 to focus fire extinguishing in each area for a region where a thermal event such as thermal runaway has occurred. Also, in this embodiment, the structural rigidity supplementation effect of the vertical portion 1530 may be improved. In particular, shock may be applied to the battery module 1000 in various directions such as X-axis direction and Y-axis direction, and in this case, the battery module 1000 may be supported against external force in various directions by the vertical portion 1530.

In addition, according to this embodiment, the path from the opening 1521 to the venting hole 150a becomes longer, and many bends may be formed in the path. In other words, the venting gas introduced into a specific mounting space of the fire extinguishing cartridge 1300 may be discharged to the outside through the venting hole 150a after passing through many mounting spaces. For example, in the embodiment of FIG. 11, the venting gas introduced into the space S2 may additionally pass through two mounting spaces (the space S1 and the space S3) and then flow out into the venting hole 150a. Therefore, the cooling effect of the venting gas inside the top frame 1500 and the effect of suppressing emissions of sparks or the like may be further improved.

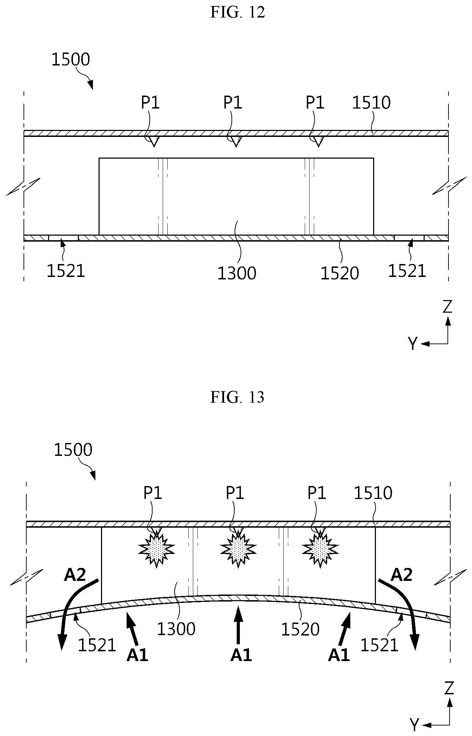

FIG. 12 is an enlarged cross-sectional view showing a partial configuration of a battery module according to still another embodiment of the present disclosure. FIG. 13 is a diagram schematically showing a fire extinguishing agent emission configuration for the embodiment of FIG. 12.

First, referring to FIG. 12, a rupture portion may be provided in the inner space of the top frame 1500 where the fire extinguishing cartridge 1300 is accommodated, as indicated by P1. The rupture portion P1 may be configured to rupture the fire extinguishing cartridge and emit the fire extinguishing agent in a situation where a trigger condition for the emission of the fire extinguishing agent, such as thermal runaway, is satisfied. In particular, the rupture portion P1 may be formed in a needle-like shape to break the exterior material of the fire extinguishing cartridge 1300.

For example, the fire extinguishing cartridge 1300 may have an exterior material made of a polymer material to sealably accommodate the fire extinguishing agent therein and be ruptured by a needle-like material or the like. In addition, the fire extinguishing cartridge 1300 may be configured in various forms to contain a fire extinguishing agent and to discharge the fire extinguishing agent when a trigger condition occurs.

In a normal state, the rupture portion P1 may be spaced apart from the fire extinguishing cartridge 1300 by a predetermined distance, as shown in FIG. 12. To this end, the fire extinguishing cartridge 1300 may be placed on the upper surface of the lower plate 1520, and the rupture portion P1 may be provided on the lower surface of the upper plate 1510 and spaced apart from the upper surface of the fire extinguishing cartridge 1300.

In this embodiment, when venting gas is discharged from the cell assembly 1200 due to thermal runaway or the like, the lower plate 1520 may be pressed upward and at least partially move toward the upper side, as indicated by arrow A1 in FIG. 13. At this time, the fire extinguishing cartridge 1300 placed on the lower plate 1520 may also move upward and be ruptured by the rupture portion P1. Then, the fire extinguishing agent discharged from the fire extinguishing cartridge 1300 may be put into the cell assembly 1200 located at the lower side through the opening 1521, as indicated by arrow A2.

In this embodiment, the configuration in which the lower plate 1520 described above includes a material having a lower elastic modulus and/or a higher thermal expansion coefficient than the upper plate 1510 may be more advantageously applied. That is, when venting gas is applied as indicated by arrow A1 in FIG. 13, the lower plate 1520 may be easily bent upward due to the pressure and/or heat of the venting gas. Also, due to this, the fire extinguishing cartridge 1300 may be easily ruptured by the rupture portion P1.

Also, as shown in the embodiments of FIGS. 12 and 13, the opening 1521 may be formed in a portion of the lower plate 1520 where the fire extinguishing cartridge 1300 is not placed. In particular, the fire extinguishing cartridge 1300 may be placed in the portion of the lower plate 1520 where deformation occurs most when a trigger condition is satisfied, for example when pressure or temperature increases. Also, the opening 1521 may be located in a portion of the lower plate 1520 that undergoes relatively less deformation than the portion where the fire extinguishing cartridge 1300 is placed.

For example, the fire extinguishing cartridge 1300 may be located in a portion of the lower plate 1520 that may move upward the most when venting gas is generated from the cell assembly 1200. Also, the opening 1521 may be located in a portion of the lower plate 1520 that does not move upward or may move the least. As a more specific example, as shown in FIGS. 12 and 13, the fire extinguishing cartridge 1300 may be placed in the central portion of the lower plate 1520, and the opening 1521 may be provided at a portion spaced apart from the portion of the lower plate 1520 where the fire extinguishing cartridge 1300 is placed by a predetermined distance in a horizontal direction, for example at a side portion of the fire extinguishing cartridge 1300, especially at both sides thereof.

According to this embodiment of the present disclosure, when the exterior material of the fire extinguishing cartridge 1300 ruptures and the fire extinguishing agent contained therein is discharged, the exterior material may be prevented from blocking the opening 1521. Therefore, in this case, the fire extinguishing agent may be smoothly put into the cell assembly 1200.

Also, according to the embodiment, when the lower plate 1520 is deformed in a situation such as thermal runaway, the fire extinguishing agent discharged from the fire extinguishing cartridge 1300 may move smoothly toward the opening 1521 by gravity. Therefore, the amount and speed of the fire extinguishing agent put into the cell assembly 1200 may be improved.

Meanwhile, in the embodiment where the upper plate 1510 and the lower plate 1520 are configured to become closer due to pressure or heat, as in the embodiment of FIGS. 12 and 13, in a normal state, at least a part of the vertical portion 1530 may not come into contact with the upper plate 1510 or the lower plate 1520. In this case, the separated space between the vertical portion 1530 and the upper plate 1510 or lower plate 1520 may provide a space in which the upper plate 1510 or the lower plate 1520 can be deformed in an abnormal state.

A battery pack according to the present disclosure may include one or more battery modules according to the present disclosure described above. In addition, the battery pack according to the present disclosure may further include various components other than these battery modules, for example components of the battery pack known at the time of filing of this application, such as a BMS or a bus bar, a pack housing, a relay, and a current sensor.

In addition, in the battery pack according to the present disclosure, the module housing described above may serve as a pack housing. In this case, components of the battery pack such as a BMS, a bus bar, and a relay may be included inside the module housing. In this case, the battery module according to the present disclosure as described above may become a battery pack according to the present disclosure. Also, this type of battery pack may be called Cell-To-Pack in that the battery cells are directly accommodated in the pack housing. For example, the configuration shown in FIGS. 1 and 2 may be regarded as representing the battery pack according to an embodiment of the present disclosure.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

The description of the present disclosure and the accompanying drawings to illustrate embodiments thereof may be shown in a somewhat exaggerated form in order to emphasize or highlight the technical content of the present disclosure, but it should be interpreted that various modifications can be made thereto by those skilled in the art in consideration of the above disclosure and the drawings.

### Reference Signs

| | | | |
|---|---|---|---|
| 1000: | battery module | | |
| 1100: | module housing | 1200: | cell assembly |
| 1210: | battery cell | 1300: | fire extinguishing cartridge |
| 1500: | top frame | | |
| 1510: | upper plate | 1520: | lower plate |
| 1521: | opening | 1523: | guiding wall |
| 1530: | vertical portion | 1531: | separated space |
| 150a, 150b, 150c, 150d: | venting hole | | |
| 1600: | base frame | 1610: | right frame (side frame) |
| 1620: | left frame (side frame) | 1630: | front frame (side frame) |
| 1640: | rear frame (side frame) | | |
| 1700: | stopper | S: | mounting space |

## Claims

1. A battery module, comprising:
a module housing including a top frame and configured to form an inner space;
at least one cell assembly accommodated in the inner space of the module housing and including at least one battery cell; and
a fire extinguishing cartridge provided to the top frame and configured to emit a fire extinguishing agent when a trigger condition for starting operation is achieved.

2. The battery module according to claim 1,
wherein the trigger condition is at least one of the case where an internal temperature is equal to or greater than a criterion temperature and the case where an internal pressure is equal to or greater than a criterion pressure.

3. The battery module according to claim 1,
wherein the top frame includes:
an upper plate;
a lower plate spaced apart from the upper plate and configured to face the cell assembly in a lower direction; and
a vertical portion configured to physically support the upper and lower plates therebetween so that a plurality of mounting spaces are provided between the upper and lower plates,
wherein the fire extinguishing cartridge is provided in at least one of the plurality of mounting spaces.

4. The battery module according to claim 3,
wherein the vertical portion is arranged in a longitudinal direction corresponding to the cell assembly.

5. The battery module according to claim 3,
wherein the lower plate is made of a material with a lower elastic modulus or a higher heat transfer coefficient or thermal expansion coefficient compared to the upper plate.

6. The battery module according to claim 3,
wherein the mounting space is connected to a venting hole, through which a venting gas generated from the cell assembly flows to the outside, to form a flow path.

7. The battery module according to claim 3,
wherein the lower plate has an opening formed in an area corresponding to the mounting space.

8. The battery module according to claim 7, further comprising:
a stopper provided in the opening and configured to open the opening when the temperature or pressure of the inner space increases to a predetermined level or above.

9. The battery module according to claim 8,
wherein the stopper has a needle-like protrusion formed at a top thereof to perforate the fire extinguishing cartridge when the stopper moves upward due to pressure.

10. The battery module according to claim 8,
wherein the stopper has a wedge shape with a tapered top and is made of elastic material.

11. A battery pack, comprising the battery module according to any one of claims 1 to 10.

12. A vehicle, comprising the battery module according to any one of claims 1 to 10.
